# EUROPÄISCHE PATENTSCHRIFT

(11) **EP 3 853 573 B1**
(45) Veröffentlichungstag und Bekanntmachung des Hinweises auf die Patenterteilung: **09.12.2026**
(21) Anmeldenummer: 19766212.5
(22) Anmeldetag: 05.09.2019
(51) Int. Cl.: G01L 9/00, G01L 19/04, G01L 19/14

(54) **DRUCKMESSEINRICHTUNG**
PRESSURE MEASURING DEVICE
DISPOSITIF DE MESURE DE PRESSION

(30) Priorität: 19.09.2018 DE 102018123041
(43) Veröffentlichungstag der Anmeldung: 28.07.2021
(73) Patentinhaber: Endress+Hauser SE+Co. KG, 79689 Maulburg (DE)
(72) Erfinder: PONATH, Nils, 79539 Lörrach (DE); ROSSBERG, Andreas, 79713 Bad Säckingen (DE); SCHMIDT, Elke, 79713 Bad Säckingen (DE)
(74) Vertreter: Endress + Hauser Group Services (Deutschland) AG+Co. KG
(86) Internationale Anmeldenummer: PCT/EP2019/073738
(87) Internationale Veröffentlichungsnummer: WO 2020/057995

(56) Entgegenhaltungen:
- EP-A1- 0 735 353
- EP-A1- 2 860 505
- EP-B1- 0 735 353
- DE-A1- 102014 106 704
- DE-A1- 3 818 458

## Beschreibung

Die Erfindung betrifft eine Druckmesseinrichtung mit
einem keramischen Drucksensor, und
einem Prozessanschluss, mittels dessen die Druckmesseinrichtung auf einem hierzu komplementären Anschluss montierbar und/oder an einen hierzu komplementären Anschluss einer Wirkdruckleitung anschließbar ist,
deren Drucksensor eine Messmembran umfasst und derart befestigt ist, dass dessen Messmembran mit einem zu messenden Druck beaufschlagbar ist,
sowie ein Verfahren zur Herstellung einer solchen Druckmesseinrichtung.

Druckmesseinrichtungen der eingangs genannten Art werden in der industriellen Messtechnik zur messtechnischen Erfassung von Drücken eingesetzt.

In Druckmesseinrichtungen der eingangs genannten Art wird der keramische Drucksensor heute üblicher Weise mittels einer Einspannvorrichtung befestigt, in der ein äußerer Rand des Drucksensors in axialer, d.h. parallel zu einer Flächennormale auf die Messmembran verlaufender Richtung eingespannt ist.

Diese Einspannvorrichtungen umfassen üblicher Weise ein Sensorgehäuse mit einer im Wesentlichen zylindrischen, den Drucksensor außenseitlich allseitig umgebenden Gehäusewand, an die endseitig eine sich radial einwärts erstreckende Schulter angeformt ist. Diese Schulter bildet zusammen mit einem in das Sensorgehäuse eingesetzten Gegenlager die Einspannvorrichtung, in der der Rand des Drucksensors derart eingespannt ist, dass dessen Messmembran durch eine außenseitlich allseitig von der Schulter umgebende Öffnung hindurch mit dem zu messenden Druck beaufschlagbar ist. Zusätzlich umfassen diese Druckmesseinrichtungen eine zwischen einem äußeren Rand der Messmembran und der Schulter eingespannte Dichtvorrichtung, wie z.B. einen O-Ring aus einem Elastomer, die eine Abdichtung eines Gehäuseinnenraums gegenüber der zur Druckbeaufschlagung dienenden Öffnung bewirkt.

Einspannvorrichtungen üben jedoch zwangläufig Kräfte auf den Drucksensor aus. Diese Kräfte dienen insb. dazu, die Befestigung des Drucksensors und die Dichtwirkung der Dichtvorrichtung sicherzustellen. Diese Kräfte können sich insb. aufgrund der unterschiedlichen thermischen Ausdehnungskoeffizienten des in der Regel aus Edelstahl bestehenden Sensorgehäuses und des keramischen Drucksensors in Abhängigkeit von der Temperatur, sowie ggfs. auch in Abhängigkeit von dem auf die Messmembran einwirkenden Druck verändern.

Es ist bekannt, nachteilige Auswirkungen der Einspannvorrichtung auf die erzielbare Messgenauigkeit zu reduzieren, indem zur Einspannung ein in axialer Richtung elastisches Element eingesetzt wird, dass dazu dient, auf Druck- und/oder Temperaturänderungen zurückzuführende Änderungen der Einspannkräfte auszugleichen. Darüber hinaus kann zur Reduktion der nachteiligen Auswirkungen der Einspannvorrichtung eine in der DE 103 34 854 A1 beschriebene Dichtvorrichtung eingesetzt werden. Diese umfasst einen zwischen der Schulter und dem äußeren Rand der Messmembran angeordneten keramischen Entkopplungsring, auf dessen dem Drucksensor zugewandten Stirnseite und auf dessen der Schulter zugewandten Stirnseite jeweils eine Flachdichtung aus Polytetrafluorethylen (PTFE) angeordnet ist. Hierdurch werden in radialer Richtung auf die Messmembran einwirkende Kräfte reduziert, die andernfalls zu Veränderungen der druckabhängigen Verformbarkeit der Messmembran führen würden.

Durch diese Maßnahmen wird erreicht, dass entsprechend ausgebildete Druckmesseinrichtungen in einem vergleichsweise großen Druckmessbereich eine hohe Messgenauigkeit aufweisen.

Zur Abdichtung des Gehäuseinnenraums einsetzbare Dichtungsmaterialien, wie z.B. Elastomere oder Thermoplaste, sind jedoch nicht diffusionsdicht und altern mit der Zeit. Letzteres ist insb. im Hinblick auf die Messung von sehr kleinen Drücken, wie z.B. unterhalb des Atmosphärendrucks von einem Bar liegenden Drücken, problematisch, da sich hier bereits sehr kleine Veränderungen der Einspannkräfte nachteilig auf die Messgenauigkeit auswirken und die Dichtheit der durch die Dichtvorrichtung bewirkten Abdichtung sehr hohen Anforderungen genügen muss.

Den auf die Alterung und die fehlenden Diffusionsdichtheit von Dichtungsmaterialien zurückzuführenden Problemen kann z.B. auf die in der
EP 2 860 505 A1 beschriebene Weise begegnet werden. Dort ist eine Druckmesseinrichtung beschrieben mit
einem keramischen Drucksensor und
einem Prozessanschluss, mittels dessen die Druckmesseinrichtung auf einem hierzu komplementären Anschluss montierbar und/oder an einen hierzu komplementären Anschluss einer Wirkdruckleitung anschließbar ist,
deren Drucksensor eine Messmembran umfasst und derart befestigt ist, dass dessen Messmembran mit einem zu messenden Druck beaufschlagbar ist.

Bei dieser Druckmesseinrichtung besteht der Prozessanschluss aus Titan und umfasst eine Ausnehmung, in der der Drucksensor mittels einer Befestigungsanordnung befestigt ist. Der Prozessanschluss ist im Wesentlichen frontbündig in einen Flansch eingeschweißt, mittels dessen die Druckmesseinrichtung an einem Einsatzort montierbar ist. Die Befestigungsanordnung umfasst einen mittels einer Glaslötung oder einer Hartlötung mit einem äußeren Membranrand der Messmembran verbundenen Keramikring. Dieser Keramikring ist mit einem Metallring aus Titan verbunden, der wiederum mittels einer ringförmig entlang dessen äußeren Randes umlaufenden Schweißverbindung mit dem Prozessanschluss verbunden ist. Gemäß einer ersten Variante ist der Metallring als ein den Keramikring außenseitlich allseitig umgebender, auf den Keramikring aufgeschrumpfter Ring ausgebildet. Gemäß einer zweiten Variante ist der Metallring als eine mittels einer Hartlötung mit einer von der Messmembran abgewandten Stirnseite des Keramikrings verbundene kreisringscheibenförmige Scheibe ausgebildet. Bei beiden Varianten bildet die Befestigungsanordnung eine außenseitliche Begrenzung einer zur Druckbeaufschlagung der Messmembran dienenden Öffnung, die gegenüber dem Innenraum der Ausnehmung durch die Lötung zwischen Membranrand und Keramikring und die Verbindung zwischen dem Metallring und dem Keramikring diffusionsdicht abgeschlossen ist.

Zur Erzeugung der Hartlötungen wird ein Silberbasislot eingesetzt, das vorzugsweise Kupfer und Titan enthält. In Verbindung mit der Hartlötung zwischen dem Keramikring und dem Metallring ist hierzu erwähnt, dass ein Titananteil im Lot die Anbindung an die Keramik beeinflusst und sich mit einem Titananteil von 3 % bis 5 % besonders gute Ergebnisse erzielen lassen. Diese Hartlötungen sind somit Aktivhartlötungen, die mittels eines Aktivhartlots hergestellt werden, das Titan als aktive Komponente umfasst.

Aktivhartlote zeichnen sich dadurch aus, dass deren aktive Komponente beim Aktivhartlöten mit der Keramik reagiert. Dabei wird durch Reduktion der Keramik eine mechanisch hochfeste chemische Verbindung zwischen der Keramik und dem Aktivhartlot bewirkt. Aktivhartlote bieten den Vorteil, dass sie aufgrund der darin enthaltenen aktiven Komponente in der Lage sind, keramische Bauteile zu benetzen und ein direktes Löten von keramischen Bauteilen ohne vorherige Metallisierung der Keramik ermöglichen. Nachteilig ist jedoch, dass Aktivhartlote eine vergleichsweise hohe Schmelztemperatur aufweisen und somit bei einer vergleichsweise hohen Fügetemperatur verarbeitet werden müssen. Ein weiterer Nachteil besteht darin, dass die aktive Komponente die verfahrenstechnische Kontrollierbarkeit des Lötvorgangs erschwert.

Wie aus den Figuren der EP 2 860 505 A1 ersichtlich, ist der Drucksensor in der Ausnehmung rückseitig, also auf dessen von der Messmembran abgewandten Rückseite, durch den Prozessanschluss abgestützt und auf dessen der Rückseite gegenüberliegenden Frontseite über die Befestigungsanordnung auf mechanisch vergleichsweise starre Weise mit dem Prozessanschluss verbunden. Titan und Keramik weisen thermische Ausdehnungskoeffizienten auf, die einander sehr ähnlich sind. Trotzdem kann bei der in der EP 2 860 505 A1 beschriebenen Sensor-Befestigung nicht ausgeschlossen werden, dass über die im Wesentlichen in radialer Richtung, d.h. senkrecht zur Flächennormale auf die Messmembran, verlaufende, über die Befestigungsanordnung bestehende starre Verbindung zwischen der Messmembran und dem Prozessanschluss in radialer Richtung wirkende thermomechanische Spannungen auf die Messmembran übertragen werden. Diese Spannungen können dazu führen, dass sich die druckabhängige Verformbarkeit der Messmembran in Abhängigkeit von der Temperatur verändert, was wiederum einen von der Temperatur abhängigen Messfehler zur Folge hat.

Außerdem stellt der Prozessanschluss aus Titan eine Sonderanfertigung dar, die deutlich teurer ist als in der industriellen Messtechnik in großen Stückzahlen eingesetzte Standardprozessanschlüsse, die regelmäßig aus im Vergleich zu Titan sehr kostengünstigem Edelstahl bestehen. Diese Kosten würden noch weiter erhöht, wenn auch der Flansch aus Titan gefertigt würde. Würde man stattdessen einen Flansch aus Edelstahl einsetzten, so würden aufgrund der deutlich voneinander verschiedenen thermischen Ausdehnungskoeffizienten von Titan und Edelstahl von der Temperatur abhängige thermomechanische Spannungen entstehen, die über die Befestigungsanordnung auf die Messmembran übertragen werden.

Es ist eine Aufgabe der Erfindung, eine Druckmesseinrichtung der eingangs genannten Art anzugeben, die kostengünstig herstellbar ist und mit der kleine Drücke, wie z.B. Drücke von kleiner gleich einem Bar, mit einer vergleichsweise hohen Messgenauigkeit bestimmt werden können.

Zur Lösung dieser Aufgabe umfasst die Erfindung eine Druckmesseinrichtung gemäß Anspruch 1 oder Anspruch 2.

Beide Varianten umfassen eine Druckmesseinrichtung mit
einem keramischen Drucksensor, und
einem Prozessanschluss, mittels dessen die Druckmesseinrichtung auf einem hierzu komplementären Anschluss montierbar und/oder an einen hierzu komplementären Anschluss einer Wirkdruckleitung anschließbar ist,
deren Drucksensor eine Messmembran umfasst und derart befestigt ist, dass dessen Messmembran mit einem zu messenden Druck beaufschlagbar ist,
wobei die Druckmesseinrichtung einen Träger aus Titan umfasst,
wobei der Träger einen freistehenden, rohrförmigen, parallel zur Flächennormale auf die Messmembran verlaufenden Trägerbereich umfasst,
wobei der Träger einen dem Prozessanschluss zugewandten, mit dem Prozessanschluss verbundenen Endbereich umfasst, und
der Träger einen vom Prozessanschluss abgewandten Endbereich umfasst, an dem der Drucksensor mittels einer einen äußerer Rand einer Stirnseite des Drucksensors mit dem vom Prozessanschluss abgewandten Endbereich des Träger verbindenden, den Drucksensor tragenden Fügung befestigt ist, wobei die Fügung zwischen dem Drucksensor und dem Träger eine mittels eines Hartlots erzeugte Fügung ist.

Erfindungsgemäße Druckmesseinrichtungen bieten den Vorteil, dass der Drucksensor ohne den Einsatz einer Einspannvorrichtung und ohne den Einsatz von Elastomeren oder Thermoplasten in der Druckmesseinrichtung befestigt ist. Dabei ist über die Fügung zwischen Träger und Drucksensor eine druckfeste, diffusionsdichte Abdichtung gegeben.

Ein weiterer Vorteil besteht darin, dass über den freistehenden, rohrförmigen, parallel zur Flächennormale auf die Messmembran verlaufenden Trägerbereich eine thermomechanische Entkopplung zwischen dem Prozessanschluss und dem Drucksensor gegeben ist, die den Drucksensor vor darauf übertragbaren, auf die unterschiedlichen thermischen Ausdehnungskoeffizienten von Prozessanschluss und Träger zurückzuführenden, thermomechanischen Spannungen schützt. Das bietet in Kombination mit der freistehenden Montage des Trägers auf dem Prozessanschluss den Vorteil, dass als Prozessanschluss ein Standardprozessanschluss aus einem Edelstahl eingesetzt werden kann, ohne dass sich die erzielbare Messgenauigkeit hierdurch maßgeblich verschlechtert. Entsprechend können erfindungsgemäße Druckmesseinrichtungen deutlich kostengünstiger hergestellt werden als Druckmesseinrichtungen, deren Prozessanschluss als Spezialanfertigung aus Titan ausgebildet ist.

Ein weiterer Vorteil besteht darin, dass Titan einen thermischen Ausdehnungskoeffizienten aufweist, der sehr gut an den thermischen Ausdehnungskoeffizienten der Keramik des Drucksensors angepasst ist. Entsprechend sind auf die thermischen Ausdehnungskoeffizienten von Träger und Drucksensor zurückzuführende, auf den Drucksensor einwirkende thermomechanischen Spannungen sehr gering, was sich positiv auf die erzielbare Messgenauigkeit auswirkt.

Die erste Variante gemäß Anspruch 1 zeichnet sich dadurch aus, dass
das Hartlot frei von zum Aktivhartlöten einsetzbaren aktiven Komponenten ist und dass der Träger als freistehend auf dem Prozessanschluss angeordnetes, den rohrförmigen Trägerbereich umfassendes Rohr ausgebildet ist, dessen dem Prozessanschluss gegenüberliegender Endbereich mittels der Fügung mit einem äußeren Rand der durch die Messmembran gebildeten, vorderen Stirnseite des Drucksensors verbunden ist.

Die zweite Variante gemäß Anspruch 2 zeichnet sich dadurch aus, dass
das Hartlot frei von zum Aktivhartlöten einsetzbaren aktiven Komponenten ist und dass die Messmembran unter Einschluss einer Druckkammer mit einem Grundkörper des Drucksensors verbunden ist,
der vom Prozessanschluss abgewandte Endbereich des Trägers eine endseitig an den rohrförmigen Trägerbereich anschließende, sich radial nach innen erstreckende Schulter aufweist, und
ein äußerer Rand der durch den Grundkörper gebildeten, rückseitigen Stirnseite des Drucksensors mittels der Fügung mit einem von dem rohrförmigen Trägerbereich beabstandeten, inneren Randbereich der dem Prozessanschluss zugewandten Innenseite der Schulter verbunden ist.

Eine Weiterbildung der zweiten Variante zeichnet sich dadurch aus, dass
der Trägerbereich in parallel zu einer Flächennormale auf die Messmembran verlaufender Richtung eine Länge aufweist, die größer gleich einer Bauhöhe ist, die der Drucksensor in parallel zur Flächennormale auf die Messmembran verlaufender Richtung aufweist.

Eine erste Weiterbildung erfindungsgemäßer Druckmesseinrichtungen zeichnet sich dadurch aus, dass der Prozessanschluss einen durch den Prozessanschluss hindurch verlaufenden Druckübertragungspfad aufweist, der in einer der Messmembran vorgelagerten, diffusionsdicht verschlossenen Druckempfangskammer mündet, über die die Messmembran mit dem zu messenden Druck beaufschlagbar ist.

Bevorzugte Ausgestaltungen zeichnen sich dadurch aus, dass
der rohrförmige Trägerbereich des Trägers in parallel zur Längsachse auf die Messmembran verlaufender Richtung eine Länge aufweist, die größer als dessen Wandstärke ist, und/oder
der rohrförmige Trägerbereich des Trägers eine Wandstärke von 1 mm bis 2 mm aufweist.

Eine zweite Weiterbildung zeichnet sich dadurch aus, dass der Drucksensor als freistehender, ausschließlich mittels der den Rand der Stirnseite des Drucksensors mit dem Träger verbindenden Fügung befestigter Drucksensor ausgebildet ist.

Eine dritte Weiterbildung zeichnet sich dadurch aus, dass die Druckmesseinrichtung ein Gehäuse umfasst, wobei das Gehäuse
auf dem Prozessanschluss montiert ist,
den Träger, den Drucksensor und eine an den Drucksensor angeschlossene Messelektronik umgibt, und
von dem Träger und von dem Drucksensor beabstandet ist.

Weitere Weiterbildungen zeichnen sich dadurch aus, dass
eine dem Prozessanschluss zugewandte Stirnseite des Endbereichs des Trägers mittels einer Fügung unmittelbar mit dem Prozessanschluss verbunden ist, oder
der dem Prozessanschluss zugewandte Endbereich des Trägers unter Zwischenfügung mindestens eines in parallel zur Flächennormale auf die Messmembran verlaufender Richtung zwischen dem Träger und dem Prozessanschluss angeordneten weiteren Bauteils diffusionsdicht mit dem Prozessanschluss verbunden.

Weitere Ausgestaltungen zeichnen sich dadurch aus, dass der Prozessanschluss aus einem Edelstahl besteht und/oder, dass Messmembran und/oder Grundkörper des Drucksensors jeweils aus einer Oxidkeramik oder aus Aluminiumoxid (Al₂O₃) bestehen.

Eine weitere Weiterbildung zeichnet sich dadurch aus, dass
die Fügung als eine mittels eines Fügeverfahrens erzeugte Fügung ausgebildet ist, bei dem
a) eine Anordnung erzeugt wird, in der die Fügeflächen von Träger und Drucksensor unter Zwischenfügung des Hartlots aufeinander aufliegen, und
b) die Anordnung auf eine Fügetemperatur erwärmt wird, bei der das Hartlot aufgeschmolzen wird und ein Anteil des im Träger enthaltenen Titans durch das mit dem Träger in Kontakt stehende, aufgeschmolzene Hartlot hindurch zur Keramik des Drucksensors diffundiert und dort derart mit der Keramik reagiert, dass sich eine Titan umfassende chemische Verbindung ausbildet.

Eine Weiterbildung der letztgenannten Weiterbildungen zeichnet sich dadurch aus, dass die Fügung zwischen Drucksensor und Träger eine mittels eines Silber und Kupfer umfassenden Hartlots, eines ausschließlich Silber und Kupfer umfassenden Hartlots, eines Silber, Kupfer und eine weitere nicht aktive Komponente umfassenden Hartlots, eines Silber-Kupfer-Indium-Hartlots oder eines Silber-Kupfer-Zinn-Hartlots erzeugte Fügung ist.

Weitere Weiterbildungen zeichnen sich dadurch aus, dass der Träger mit dem Prozessanschluss oder einem zwischen dem Träger und dem Prozessanschluss angeordneten Bauteil aus Edelstahl entweder mittels einer als Schweißung ausgebildeten Fügung oder mittels einer mittels eines Hartlots erzeugten Fügung verbunden ist, wobei das zur Erzeugung dieser Fügung eingesetzte Hartlot entweder
a) gleich dem zur Erzeugung der den Drucksensor mit dem Träger verbindenden Fügung eingesetzten Hartlots ist oder zumindest eine Schmelztemperatur aufweist, die im Wesentlichen gleich der Schmelztemperatur des zur Erzeugung der den Drucksensor mit dem Träger verbindenden Fügung eingesetzten Hartlots ist, oder
b) eine Schmelztemperatur aufweist, die geringer als eine Schmelztemperatur des zur Erzeugung der den Drucksensor mit dem Träger verbindenden Fügung eingesetzten Hartlots ist, und/oder ein Kupfer-Silber-Hartlot ist, das einen höheren Kupfer-Anteil und einen geringeren Silber-Anteil enthält als das Kupfer und Silber umfassende, zur Erzeugung der Fügung zwischen Drucksensor und Träger eingesetzte Hartlot.

Des Weiteren umfasst die Erfindung ein Verfahren zur Herstellung einer erfindungsgemäßen Druckmesseinrichtung, das sich dadurch auszeichnet, dass
der Drucksensor, der Träger und der Prozessanschluss als vorgefertigte Einzelteile bereitgestellt werden,
der Drucksensor mit dem Träger verbunden wird, indem ein Fügeverfahren ausgeführt wird, mittels dessen die den Drucksensor mit dem Träger verbindende Fügung erzeugt wird, und
der Träger auf dem Prozessanschluss montiert wird.

Eine Weiterbildung dieses Verfahrens zeichnet sich dadurch aus, dass die den Drucksensor mit dem Träger verbindende Fügung mittels eines Fügeverfahrens ausgeführt wird, bei dem
a) eine Anordnung erzeugt wird, in der die Fügeflächen von Träger und Drucksensor unter Zwischenfügung des Hartlots aufeinander aufliegen, und
b) die Anordnung auf eine Fügetemperatur erwärmt wird, bei der das Hartlot aufgeschmolzen wird und ein Anteil des im Träger enthaltenen Titans durch das mit dem Träger in Kontakt stehende, aufgeschmolzene Hartlot hindurch zur Keramik des Drucksensors diffundiert und dort derart mit der Keramik reagiert, dass sich eine Titan umfassende chemische Verbindung ausbildet.

Die Erfindung und deren Vorteile werden nun anhand der Figuren der Zeichnung, in denen zwei Ausführungsbeispiele dargestellt sind, näher erläutert. Gleiche Elemente sind in den Figuren mit den gleichen Bezugszeichen versehen. Um Elemente sehr unterschiedlicher Abmessungen darstellen zu können, wurde eine nicht immer maßstabsgetreue Darstellung gewählt.
- Fig. 1 zeigt:: ein Beispiel einer Druckmesseinrichtung; und
- Fig. 2 zeigt:: ein weiteres Beispiel einer Druckmesseinrichtung.

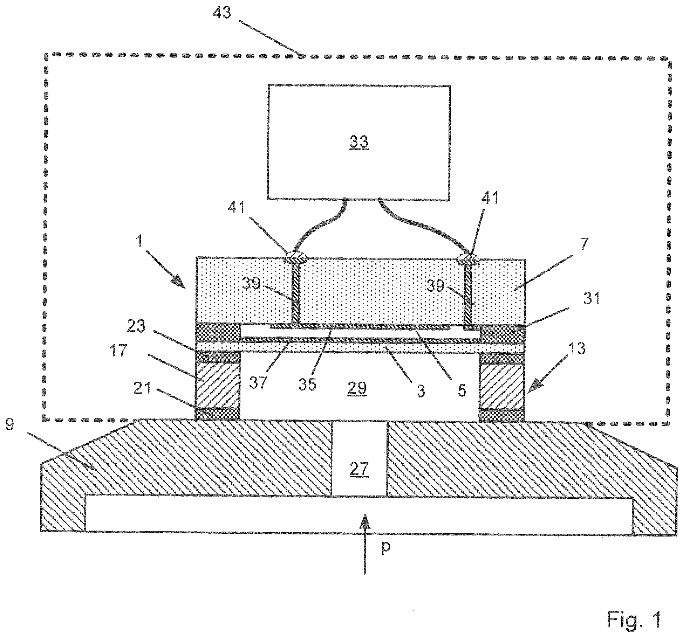

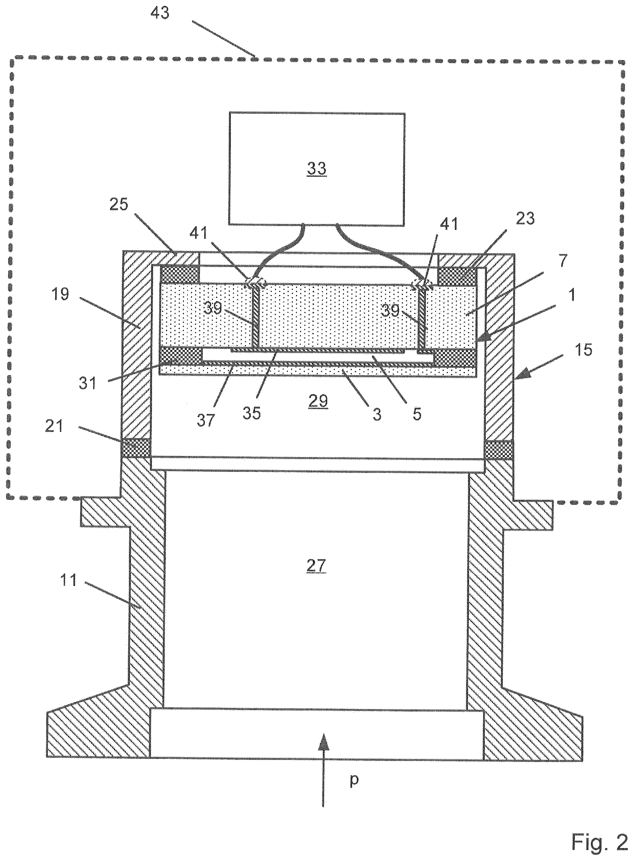

Fig. 1 und 2 zeigen jeweils ein Beispiel einer erfindungsgemäßen Druckmesseinrichtung. Diese umfassen jeweils einen keramischen Drucksensor 1, der eine Messmembran 3 umfasst. Bei den hier als Beispiel dargestellten Drucksensoren 1 ist die Messmembran 3 unter Einschluss einer Druckkammer 5 mit einem Grundkörper 7 des Drucksensors 1 verbunden. Der Drucksensor 1 ist in der jeweiligen Druckmesseinrichtung derart befestigt, dass dessen Messmembran 3 mit einem zu messenden Druck p beaufschlagbar ist. Zusätzlich umfassen die Druckmesseinrichtungen jeweils einen Prozessanschluss 9, 11, mittels dessen die Druckmesseinrichtung auf einem hierzu komplementären Anschluss montierbar und/oder an einen hierzu komplementären Anschluss einer Wirkdruckleitung anschließbar ist.

Erfindungsgemäße Druckmesseinrichtungen zeichnen sich dadurch aus, dass sie einen Träger 13, 15 aus Titan umfassen, der einen freistehenden rohrförmigen, parallel zur Flächennormale auf die Messmembran 3 verlaufenden Trägerbereich 17, 19 umfasst. Dieser Träger 13, 15 umfasst einen dem Prozessanschluss 9, 11 zugewandten, mit dem Prozessanschluss 9, 11 verbundenen Endbereich. Bei den hier als Beispiel dargestellten Druckmesseinrichtungen ist hierzu eine dem Prozessanschluss 9, 11 zugewandte Stirnseite des Endbereichs des Trägers 13, 15 mittels einer Fügung 21 unmittelbar mit dem Prozessanschluss 9, 11 verbunden. Alternativ kann der dem Prozessanschluss 9, 11 zugewandte Endbereich des Trägers 13, 15 auch unter Zwischenfügung mindestens eines in parallel zur Flächennormale auf die Messmembran 3 verlaufender Richtung zwischen dem Träger 13, 15 und dem Prozessanschluss 9, 11 angeordneten weiteren Bauteils, wie z.B. einem Verbindungsrohr, diffusionsdicht mit dem Prozessanschluss 9, 11 verbunden sein. Des Weiteren umfasst der Träger 13, 15 einen vom Prozessanschluss 9, 11 abgewandten Endbereich, an dem der Drucksensor 1 mittels einer einen äußerer Rand einer Stirnseite des Drucksensors 1 mit dem vom Prozessanschluss 9, 11 abgewandten Endbereich des Träger 13, 15 verbindenden, den Drucksensor 1 tragenden Fügung 23 befestigt ist.

Erfindungsgemäße Druckmesseinrichtungen weisen die zuvor genannten Vorteile auf. Dabei können einzelne Bestandteile erfindungsgemäßer Druckmesseinrichtungen unterschiedliche einzeln oder in Kombination miteinander einsetzbare Ausgestaltungen aufweisen. Beispiele hierzu sind nachfolgend anhand der Figuren beschrieben.

Fig. 1 zeigt eine Variante der Erfindung, bei der der Träger 13 als freistehend auf dem Prozessanschluss 9 angeordnetes, den rohrförmigen Trägerbereich 17 umfassendes Rohr ausgebildet ist, dessen dem Prozessanschluss 9 gegenüberliegender Endbereich mittels der Fügung 23 mit einem äußeren Rand der durch die Messmembran 3 gebildeten, vorderen Stirnseite des Drucksensors 1 verbunden ist. Diese Variante bietet den Vorteil, dass über den Träger 13 eine im Wesentlichen nur parallel zur Flächennormale auf die Messmembran 3 auf den äußeren Rand der Messmembran 3 einwirkende Sensorbefestigung besteht, über die praktisch keine in radialer Richtung auf die Messmembran 3 einwirkenden Kräfte auf die Messmembran 3 übertragen werden.

Fig. 2 zeigt eine Variante der Erfindung, bei der der vom Prozessanschluss 11 abgewandte Endbereich des Trägers 15 eine endseitig an den rohrförmigen Trägerbereich 19 anschließende, sich radial nach innen erstreckende Schulter 25 aufweist. Bei dieser Variante ist ein äußerer Rand der durch den Grundkörper 7 gebildeten, rückseitigen Stirnseite des Drucksensors 1 mittels der Fügung 23 mit einem von dem rohrförmigen Trägerbereich 19 beabstandeten, inneren Randbereich der Schulter 25 verbunden. Diese Variante bietet den Vorteil, dass die Messmembran 3 vollständig frei liegt und somit keinen unmittelbar über die Sensorbefestigung darauf ausgeübten Kräften ausgesetzt ist. Darüber hinaus ist die Messmembran 3 hier vor möglicherweise über die Schulter 25 in radialer Richtung auf den Drucksensor 1 einwirkenden thermomechanischen Spannungen durch den zwischen Messmembran 3 und Schulter 25 angeordneten Grundkörper 7 geschützt.

Bei erfindungsgemäßen Druckmesseinrichtungen weist der rohrförmige Trägerbereich 17, 19 des Trägers 13, 15 in parallel zur Längsachse auf die Messmembran 3 verlaufender Richtung vorzugsweise eine Länge auf, die größer als dessen Wandstärke ist. Eine vergleichsweise große Länge bietet den Vorteil, dass auf die unterschiedlichen thermischen Ausdehnungskoeffizienten von Träger 13, 15 und Prozessanschluss 9, 11 zurückzuführende thermomechanische Spannungen über die gesamte Länge hinweg nahezu vollständig abgebaut werden können.

Dabei weist der Trägerbereich 19 des in Fig. 2 dargestellten Trägers 19 in parallel zur Flächennormale auf die Messmembran 3 verlaufender Richtung vorzugsweise eine Länge auf, die größer gleich einer Bauhöhe ist, die der Drucksensor 1 in parallel zur Flächennormale auf die Messmembran 3 verlaufender Richtung aufweist. Diese Ausführungsform bietet den Vorteil, dass der Trägerbereich 19 endseitig ohne Zwischenfügung eines weiteren Bauteils, wie z.B. eines metallischen Verbindungsrohrs, mittels der Fügung 21 unmittelbar auf dem Prozessanschluss 11 montiert sein kann.

Unabhängig von der sonstigen Formgebung des Trägers 13, 15 kann der rohrförmige Trägerbereich 17, 19 erfindungsgemäßer Druckmesseinrichtungen z.B. eine Wandstärke von 1 mm bis 2 mm aufweisen.

Alternativ oder zusätzlich zu den zuvor genannten Ausgestaltungen ist der Drucksensor 1 vorzugsweise als freistehender, ausschließlich mittels der den Rand der jeweiligen Stirnseite des Drucksensors 1 mit dem Träger 13, 15 verbindenden Fügung 23 befestigter Drucksensor 1 ausgebildet ist. Diese in Fig. 1 und 2 dargestellte Ausführungsform bietet gegenüber Druckmesseinrichtungen mit vor- und rückseitig abgestützten oder in einer Einspannvorrichtung eingespannten Drucksensoren den Vorteil, dass auf den Drucksensor 1 keine Einspannkräfte ausgeübt werden, die sich nachteilig auf die erzielbare Messgenauigkeit auswirken könnten und deren Größe sich unter Umständen in Abhängigkeit von der Temperatur verändern könnte.

Bei erfindungsgemäßen Druckmesseinrichtungen besteht der Prozessanschluss 9, 11 vorzugsweise aus Edelstahl. Dabei bietet die Erfindung den Vorteil, dass als Prozessanschluss 9, 11 ohne Weiteres in der industriellen Messtechnik eingesetzte Standardprozessanschlüsse eingesetzt werden können. Zur Messung von kleinen Drücken, wie z.B. von Drücken von kleiner gleich einem Bar, eignen sich hierzu insb. in der Vakuumtechnik eingesetzte Prozessanschlüsse, wie z.B. Prozessanschlüsse, die einen Kleinflansch umfassen, der mittels eines Spannrings unter Zwischenfügung einer Dichtung, wie z.B. einer Kleinflanschdichtung und/oder einer als metallische Dichtung ausgebildeten Dichtung, auf einem hierzu komplementären Gegenflansch montierbar und/oder mit einem entsprechenden Anschluss einer Wirkdruckleitung verbindbar ist.

Unabhängig von der Prozessanschlussart des Prozessanschlusses 9, 11 weisen die Prozessanschlüsse 9, 11 jeweils einen durch den jeweiligen Prozessanschluss 9, 11 hindurch verlaufenden Druckübertragungspfad 27 auf, der in einer der Messmembran 3 vorgelagerten, diffusionsdicht verschlossenen Druckempfangskammer 29 mündet, über die die Messmembran 3 mit dem zu messenden Druck p beaufschlagbar ist. Bei den hier dargestellten Ausführungsbeispielen wird die diffusionsdichte Abdichtung der Druckempfangskammer 29 durch die Fügungen 21, 23 bewirkt.

In erfindungsgemäßen Druckmesseinrichtungen sind aus dem Stand der Technik bekannte keramische Drucksensoren 1 einsetzbar. Besonders geeignet sind Drucksensoren 1, deren Grundkörper 7 und/oder deren Messmembran 3 aus einer Oxidkeramik, wie z.B. Aluminiumoxid (Al₂O₃) bestehen, wobei Grundkörper 7 und Messmembran 3 vorzugsweise aus dem gleichen Werkstoff bestehen. Die vorgenannten Keramiken bieten den Vorteil, dass deren thermischer Ausdehnungskoeffizienten dem thermischen Ausdehnungskoeffizienten des Trägers 13, 15 sehr ähnlich sind. Dabei können Grundkörper 7 und Messmembran 3 z.B. mittels einer einen äußeren Rand der Messmembran 3 mit einem äußeren Rand des Grundkörpers 7 verbindenden, die Druckkammer 5 außenseitlich allseitig umgebenden Fügung 31, z.B. einer Aktivhartlötung, wie z.B. einer mittels eines Zirkonium-Nickel-Titan - Aktivhartlots erzeugten Aktivhartlötung, miteinander verbunden sein.

Optional kann der Drucksensor 1 z.B. als Absolutdrucksensor ausgebildet sein, der einen auf eine Außenseite der Messmembran 1 einwirkenden Druck p messtechnisch erfasst. In dem Fall ist die unter der Messmembran 1 eingeschlossene Druckkammer 5 evakuiert.

Die dargestellten Drucksensoren 1 umfassen jeweils einen elektromechanischen Wandler, der dazu ausgestaltet ist, eine vom auf die Messmembran 3 einwirkenden Druck p abhängige Durchbiegung der Messmembran 3 in eine elektrische Größe umzuwandeln, anhand derer dann mittels einer an den Wandler anschließbaren oder angeschlossenen Messelektronik 33 der zu messende Druck p bestimmbar ist. Der in Fig. 1 und 2 als Beispiel dargestellte kapazitive Wandler umfasst hierzu einen Messkondensator mit einer von der druckabhängigen Durchbiegung der Messmembran 3 abhängigen Messkapazität, der eine auf einer membran-zugewandten Stirnseite des Grundkörpers 7 angeordnete Messelektrode 35 und eine auf einer dem Grundkörper 7 zugewandten Innenseite der Messmembran 3 angeordnete Gegenelektrode 37 umfasst.

Bei dem hier dargestellten Beispiel ist die Messelektrode 35 über einen durch den Grundkörper 7 hindurch verlaufenden Kontaktstift 39 mit einem auf der membran-abgewandten Stirnseite des Grundkörpers 7 angeordneten Anschluss 41 verbunden, über den die Messelektrode 35 an die Messelektronik 33 anschließbar oder angeschlossen ist. Die Gegenelektrode 37 ist über die daran angrenzende, elektrisch leitfähige Fügung 31 und einen elektrisch leitend mit der Fügung 31 verbundenen, durch den Grundkörper 7 hindurch verlaufenden Kontaktstift 39 mit einem auf der membran-abgewandten Stirnseite des Grundkörpers 7 angeordneten Anschluss 41 verbunden, über den die Gegenelektrode 37 an die Messelektronik 33 anschließbar oder angeschlossen ist.

Alternativ können anstelle der hier dargestellten Drucksensoren 1 natürlich auch andere aus dem Stand der Technik bekannte keramische Drucksensoren eingesetzt werden, die eine Messmembran aufweisen. Diese Sensoren können z.B. einen anderen mechanischen Aufbau aufweisen, auf andere Weise elektrisch anschließbar sein und/oder einen nach einem anderen Wandlerprinzip arbeitenden elektromechanischen Wandler, wie z.B. einen optischen oder einen piezoresistiven Wandler, umfassen.

Erfindungsgemäße Druckmesseinrichtungen umfassen vorzugsweise ein Gehäuse 43, das zur Aufnahme der Messelektronik 33 dient. Hierzu eignet sich insb. ein in den Figuren nur schematisch durch eine gestrichelte Linie dargestelltes Gehäuse 43, das auf dem Prozessanschluss 9, 11 montiert ist. Dieses Gehäuse 43 umgibt den Träger 13, 15, den Drucksensor 1 und die an den Drucksensor 1 angeschlossene Messelektronik 33, und ist vorzugsweise sowohl von dem Träger 13, 15 als auch von dem Drucksensor 1 beabstandet.

Bei erfindungsgemäßen Druckmesseinrichtungen ist die Fügung 23 zwischen dem Drucksensor 1 und dem Träger 13, 15 vorzugsweise eine mittels eines Hartlots erzeugte Fügung 23, wobei das Hartlot frei von zum Aktivhartlöten einsetzbaren aktiven Komponenten ist. Diese Fügung 23 ist als eine Fügung 23 ausgebildet, die dadurch erzeugt wurde, dass eine Anordnung erzeugt wird, in der die Fügeflächen von Träger 13, 15 und Drucksensor 1 unter Zwischenfügung des Hartlots aufeinander aufliegen, und die Anordnung auf eine Fügetemperatur erwärmt wird, bei der das Hartlot aufgeschmolzen wird und ein Anteil des im Träger 13, 15 enthaltenen Titans durch das mit dem Träger 13, 15 in Kontakt stehende, aufgeschmolzene Hartlot hindurch zur Keramik des Drucksensors 1 diffundiert und dort derart mit der Keramik reagiert, dass sich eine Titan umfassende chemische Verbindung ausbildet.

Dabei wird ganz bewusst kein Aktivhartlot eingesetzt, obwohl bekannt ist, dass in Aktivhartloten enthaltene aktive Komponenten die Benetzung der Keramik fördern und die Ausbildung einer mechanisch hochfesten, chemischen Verbindung bewirken. Diese Vorgehensweise bietet den Vorteil, dass das der Lötvorgang verfahrenstechnisch sehr viel leichter und besser kontrolliert werden kann als das bei der Verwendung von Aktivhartloten der Fall ist. Darüber hinaus weist das aufgeschmolzene Hartlot im Vergleich zu alternativ einsetzbaren Aktivhartloten deutlich bessere Fließeigenschaften auf. Beides führt im Ergebnis zu qualitativ hochwertigen Fügungen 23 mit hoher Druckfestigkeit und hoher Dichtheit. Dabei kann eine üblicher Weise in Form einer Heliumleckrate angegebene Heliumleckdichtigkeit der Fügung 23 von kleiner gleich
5 * 10⁻¹⁰ mbar l/s erzielt werden.

Als Hartlote eignen sich insoweit insb. die in der am 12.04.2018 eingereichten, noch unveröffentlichten Deutschen Patentanmeldung mit dem Aktenzeichen DE 102018108744.6 beschriebenen Silber und Kupfer umfassende Hartlote. Beispiele hierfür sind ausschließlich Silber und Kupfer umfassende Hartlote, sowie eine weitere nicht aktive Komponente umfassende Silber-Kupfer Hartlote, wie z.B. Silber-Kupfer-Indium Hartlote oder Silber-Kupfer-Zinn Hartlote.

Ein weiterer Vorteil besteht darin, dass Hartlote ohne aktive Komponente, wie z.B. die vorgenannten Silber und Kupfer umfassenden Hartlote, eine niedrigere Schmelztemperatur aufweisen als eine aktive Komponente umfassende Aktivhartlote, wie z.B. Silber, Kupfer und Titan umfassende Aktivhartlote. Das bietet den Vorteil, dass das Fügeverfahren bei einer Fügetemperatur ausgeführt werden kann, die größer gleich der Schmelztemperatur des Hartlots ist und die geringer als eine Schmelztemperatur eines Aktivhartlots ist, das die im Hartlot enthaltenen Komponenten und Titan als aktive Komponente enthält. Während zur Herstellung einer Aktivhartlötung mittels eines Silber, Kupfer und Titan umfassenden Aktivhartlots eine oberhalb der Schmelztemperatur des Aktivhartlots liegende Fügetemperatur im Bereich von 870 °C bis 950 °C erforderlich ist, genügt in Verbindung mit den zuvor genannten Hartloten ohne aktive Komponente bereits eine oberhalb der Schmelztemperatur des Hartlots liegende Fügetemperatur, die ausreicht, um die Diffusion des Titans des Trägers 13, 15 durch das aufgeschmolzene Hartlot hindurch zu ermöglichen. Hierzu reicht in Verbindung mit einem Silber-Kupfer Hartlot bereits eine Fügetemperatur von kleiner gleich 860°C oder im Bereich von 830 °C bis 860 °C. In Verbindung mit einem Silber-Kupfer-Indium Hartlot oder einem Silber-Kupfer-Zinn Hartlot kann je nach anteiliger Zusammensetzung dieser Hartlote sogar eine noch geringere Fügetemperatur angesetzt werden.

Die geringe Fügetemperatur bietet den Vorteil, dass sie geringer als die zur Erzeugung der als Aktivhartlötung ausgebildeten Fügung 31 zwischen Messmembran 3 und Grundkörper 7 ist, so dass die Fügung 23 zwischen Träger 13, 15 und Drucksensor 1 erzeugt werden kann, ohne dass hierdurch die Qualität der zuvor bei der Herstellung des Drucksensors 1 erzeugten, als Aktivhartlötung ausgebildeten Fügung 31 zwischen Messmembran 3 und Grundkörper 7 beeinträchtigt wird.

Die geringere Fügetemperatur bietet darüber hinaus den Vorteil, dass sich zwischen Drucksensor 1 und Träger 13, 15 deutlich weniger auf das Fügeverfahren zurückzuführende thermomechanische Spannungen ausbilden, als das bei höheren Fügetemperaturen der Fall wäre. Hierdurch lassen sich herstellungsbedingte Spannungen reduzieren, die andernfalls zu einer Vergrößerung einer Temperaturabhängigkeit der druckabhängigen Verformbarkeit der Messmembran 1 führen könnten, die wiederum einen temperaturabhängigen Messfehler zur Folge hätte.

Die Fügung 21 zwischen dem Träger 13, 15 und dem Prozessanschluss 9, 11 aus Edelstahl ist vorzugsweise ebenfalls eine mittels eines Hartlots erzeugte Hartlötung, wobei auch hier ein Hartlot eingesetzt wird, das keine aktive Komponente enthält. Hierzu wird vorzugsweise ein Hartlot eingesetzt, dessen Schmelztemperatur geringer als die Schmelztemperatur des zur Erzeugung der den Drucksensor 1 mit dem Träger 13, 15 verbindenden Fügung 23 verwendeten Hartlots ist. Hierzu eignet sich insb. ein Kupfer-Silber-Hartlot, das einen höheren Kupfer-Anteil und einen geringeren Silber-Anteil enthält, als das zur Erzeugung der Fügung 23 zwischen Drucksensor 1 und Träger 13, 15 einsetzbare Silber-Kupfer-Hartlot.

Analog wird der Träger 13, 15 von Druckmesseinrichtungen, bei denen zwischen Träger 13, 15 und Prozessanschluss 9, 11 ein weiteres Bauteil aus Edelstahl angeordnet ist, vorzugsweise mittels einer Hartlötung mit dem weiteren Bauelement verbunden. Dabei wird auch hier vorzugsweise ein Hartlot eingesetzt, dessen Schmelztemperatur geringer als die Schmelztemperatur des zur Erzeugung der den Drucksensor 1 mit dem Träger 13, 15 verbindenden Fügung 23 verwendeten Hartlots ist. Auch hierzu eignet sich insb. ein Kupfer-Silber-Hartlot, das einen höheren Kupfer-Anteil und einen geringeren Silber-Anteil enthält, als das zur Erzeugung der Fügung 23 zwischen Drucksensor 1 und Träger 13, 15 einsetzbare Silber-Kupfer Hartlot.

Bei der Herstellung erfindungsgemäßer Druckmesseinrichtungen wird vorzugsweise derart verfahren, dass der Drucksensor 1, der Träger 13, 15 und der Prozessanschluss 9, 11 als vorgefertigte Einzelteile bereitgestellt werden, der Drucksensor 1 mit dem Träger 13, 15 verbunden wird, und der Träger 13, 15 auf dem Prozessanschluss 9, 11 montiert wird. Dabei wird die Verbindung zwischen Drucksensor 1 und Träger 13, 15 mittels eines Fügeverfahrens, wie z.B. dem zuvor beschriebenen Fügeverfahren, erzeugt, mittels dessen die den Drucksensor 1 mit dem Träger 13, 15 verbindende Fügung 23 erzeugt wird.

Hierbei bietet die zuvor beschriebene Ausführungsform, bei der das zur Erzeugung der Fügung 23 zwischen dem Drucksensor 1 und dem Träger 13, 15 eingesetzte Hartlot eine höhere Schmelztemperatur aufweist als das zur Befestigung des Trägers 13, 15 auf dem Prozessanschluss 9, 11 bzw. dem Bauteil eingesetzte Hartlot den Vorteil, dass ein Stufenlötverfahren eingesetzt werden kann, bei dem die Fügung 21 zwischen Träger 13, 15 und Prozessanschluss 9, 11 bzw. zwischen Träger 13, 15 und Bauteil erst im Anschluss an die Erzeugung der Fügung 21 zwischen Drucksensor 1 und Träger 13, 15 ausgeführt wird. In dem Fall wird der Träger 13, 15 folglich zusammen mit dem vom Träger 13, 15 getragenen Drucksensor 1 auf dem Prozessanschluss 9, 11 bzw. auf dem weiteren Bauteil montiert.

Alternativ kann zur Erzeugung der Fügung 21 zwischen dem Träger 13, 15 und Prozessanschluss 9, 11 bzw. dem weiteren Bauteil ein Hartlot eingesetzt werden, dass entweder gleich dem zur Erzeugung der den Drucksensor 1 mit dem Träger 17, 19 verbindenden Fügung 23 eingesetzten Hartlots ist oder zumindest eine Schmelztemperatur aufweist, die im Wesentlichen gleich der Schmelztemperatur des zur Erzeugung der den Drucksensor 1 mit dem Träger 17, 19 verbindenden Fügung 23 eingesetzten Hartlots ist. Als Hartlot eignen sich insoweit insb. die zuvor bereits in Verbindung mit der Fügung 23 zwischen Drucksensor 1 und Träger 17, 19 genannten Hartlote. Bei dieser Ausführungsform werden die Fügung 23 zwischen Drucksensor 1 und Träger 17, 19, sowie die Fügung 21 zwischen dem Träger 13, 15 und dem Prozessanschluss 9, 11 bzw. zwischen dem Träger 13, 15 und dem weiteren Bauteil vorzugsweise im Wesentlichen zeitgleich in einem einzigen Lötverfahren erzeugt.

Eine weitere Alternative besteht darin, die Fügung 21 zwischen dem Träger 13, 15 und dem Prozessanschluss 9, 11 bzw. dem weiteren Bauteil im Anschluss an die Erzeugung der Fügung 23 zwischen Drucksensor 1 und Träger 13, 15 durch Schweißen zu erzeugen.

Bei Druckmesseinrichtungen, die das zwischen Träger 13, 15 und Prozessanschluss 9, 11 angeordnete weitere Bauteil umfassen, kann das Bauteil z.B. mittels einer Schweißung diffusionsdicht auf dem Prozessanschluss 9, 11 befestigt werden.

### Bezugszeichenliste

| | | | |
|---|---|---|---|
| 1 | Drucksensor | 23 | Fügung |
| 3 | Messmembran | 25 | Schulter |
| 5 | Druckkammer | 27 | Druckübertragungspfad |
| 7 | Grundkörper | 29 | Druckempfangskammer |
| 9 | Prozessanschluss | 31 | Fügung |
| 11 | Prozessanschluss | 33 | Messelektronik |
| 13 | Träger | 35 | Messelektrode |
| 15 | Träger | 37 | Gegenelektrode |
| 17 | Trägerbereich | 39 | Kontaktstift |
| 19 | Trägerbereich | 41 | Anschluss |
| 21 | Fügung | 43 | Gehäuse |

## Patentansprüche

1. Druckmesseinrichtung mit
einem keramischen Drucksensor (1), und
einem Prozessanschluss (9,11), mittels dessen die Druckmesseinrichtung auf einem hierzu komplementären Anschluss montierbar und/oder an einen hierzu komplementären Anschluss einer Wirkdruckleitung anschließbar ist,
deren Drucksensor (1) eine Messmembran (7) umfasst und derart befestigt ist, dass dessen Messmembran (7) mit einem zu messenden Druck (p) beaufschlagbar ist,
wobei die Druckmesseinrichtung einen Träger (13, 15) aus Titan umfasst,
wobei der Träger (13, 15) einen freistehenden, rohrförmigen, parallel zur Flächennormale auf die Messmembran (7) verlaufenden Trägerbereich (17, 19) umfasst,
wobei der Träger (13, 15) einen dem Prozessanschluss (9, 11) zugewandten, mit dem Prozessanschluss (9, 11) verbundenen Endbereich umfasst, und
wobei der Träger (13, 15) einen vom Prozessanschluss (9, 11) abgewandten Endbereich umfasst, an dem der Drucksensor (1) mittels einer einen äußerer Rand einer Stirnseite des Drucksensors (1) mit dem vom Prozessanschluss (9, 11) abgewandten Endbereich des Träger (13, 15) verbindenden, den Drucksensor (1) tragenden Fügung (23) befestigt ist, wobei die Fügung (23) zwischen dem Drucksensor (1) und dem Träger (13, 15) eine mittels eines Hartlots erzeugte Fügung (23) ist,
**dadurch gekennzeichnet, dass**
das Hartlot frei von zum Aktivhartlöten einsetzbaren aktiven Komponenten ist und
der Träger (13) als freistehend auf dem Prozessanschluss (9) angeordnetes, den rohrförmigen Trägerbereich (17) umfassendes Rohr ausgebildet ist, dessen dem Prozessanschluss (9) gegenüberliegender Endbereich mittels der Fügung (23) mit einem äußeren Rand der durch die Messmembran (7) gebildeten, vorderen Stirnseite des Drucksensors (1) verbunden ist.

2. Druckmesseinrichtung mit
einem keramischen Drucksensor (1), und
einem Prozessanschluss (9,11), mittels dessen die Druckmesseinrichtung auf einem hierzu komplementären Anschluss montierbar und/oder an einen hierzu komplementären Anschluss einer Wirkdruckleitung anschließbar ist,
deren Drucksensor (1) eine Messmembran (7) umfasst und derart befestigt ist, dass dessen Messmembran (7) mit einem zu messenden Druck (p) beaufschlagbar ist,
wobei die Druckmesseinrichtung einen Träger (13, 15) aus Titan umfasst,
wobei der Träger (13, 15) einen freistehenden, rohrförmigen, parallel zur Flächennormale auf die Messmembran (7) verlaufenden Trägerbereich (17, 19) umfasst,
wobei der Träger (13, 15) einen dem Prozessanschluss (9, 11) zugewandten, mit dem Prozessanschluss (9, 11) verbundenen Endbereich umfasst, und
wobei der Träger (13, 15) einen vom Prozessanschluss (9, 11) abgewandten Endbereich umfasst, an dem der Drucksensor (1) mittels einer einen äußerer Rand einer Stirnseite des Drucksensors (1) mit dem vom Prozessanschluss (9, 11) abgewandten Endbereich des Träger (13, 15) verbindenden, den Drucksensor (1) tragenden Fügung (23) befestigt ist, wobei die Fügung (23) zwischen dem Drucksensor (1) und dem Träger (13, 15) eine mittels eines Hartlots erzeugte Fügung (23) ist und
**dadurch gekennzeichnet, dass**
das Hartlot frei von zum Aktivhartlöten einsetzbaren aktiven Komponenten ist und
dass die Messmembran (3) unter Einschluss einer Druckkammer (5) mit einem Grundkörper (7) des Drucksensors (1) verbunden ist,
der vom Prozessanschluss (11) abgewandte Endbereich des Trägers (15) eine endseitig an den rohrförmigen Trägerbereich (19) anschließende, sich radial nach innen erstreckende Schulter (25) aufweist, und
ein äußerer Rand der durch den Grundkörper (7) gebildeten, rückseitigen Stirnseite des Drucksensors (1) mittels der Fügung (23) mit einem von dem rohrförmigen Trägerbereich (19) beabstandeten, inneren Randbereich der dem Prozessanschluss (11) zugewandten Innenseite der Schulter (25) verbunden ist.

3. Druckmesseinrichtung gemäß Anspruch 2, **dadurch gekennzeichnet, dass**
der Trägerbereich (19) in parallel zu einer Flächennormale auf die Messmembran (3) verlaufender Richtung eine Länge aufweist, die größer gleich einer Bauhöhe ist, die der Drucksensor (1) in parallel zur Flächennormale auf die Messmembran (3) verlaufender Richtung aufweist.

4. Druckmesseinrichtung gemäß Anspruch 1 bis 3, **dadurch gekennzeichnet, dass** der Prozessanschluss (9, 11) einen durch den Prozessanschluss (9, 11) hindurch verlaufenden Druckübertragungspfad (27) aufweist, der in einer der Messmembran (3) vorgelagerten, diffusionsdicht verschlossenen Druckempfangskammer (29) mündet, über die die Messmembran (3) mit dem zu messenden Druck (p) beaufschlagbar ist.

5. Druckmesseinrichtung gemäß Anspruch 1 bis 4, **dadurch gekennzeichnet, dass**
der rohrförmige Trägerbereich (17, 19) des Trägers (13, 15) in parallel zur Längsachse auf die Messmembran (7) verlaufender Richtung eine Länge aufweist, die größer als dessen Wandstärke ist, und/oder
der rohrförmige Trägerbereich (17, 19) des Trägers (13, 15) eine Wandstärke von 1 mm bis 2 mm aufweist.

6. Druckmesseinrichtung gemäß Anspruch 1 bis 5, **dadurch gekennzeichnet, dass** der Drucksensor (1) als freistehender, ausschließlich mittels der den Rand der Stirnseite des Drucksensors (1) mit dem Träger (13, 15) verbindenden Fügung (23) befestigter Drucksensor (1) ausgebildet ist.

7. Druckmesseinrichtung gemäß Anspruch 1 bis 6, **dadurch gekennzeichnet, dass** die Druckmesseinrichtung ein Gehäuse (43) umfasst, wobei das Gehäuse (43)
auf dem Prozessanschluss (9, 11) montiert ist,
den Träger (13, 15), den Drucksensor (1) und eine an den Drucksensor (1) angeschlossene Messelektronik (33) umgibt, und
von dem Träger (13, 15) und von dem Drucksensor (1) beabstandet ist.

8. Druckmesseinrichtung gemäß Anspruch 1 bis 7, **dadurch gekennzeichnet, dass**
eine dem Prozessanschluss (9, 11) zugewandte Stirnseite des Endbereichs des Trägers (13, 15) mittels einer Fügung (21) unmittelbar mit dem Prozessanschluss (9, 11) verbunden ist, oder
der dem Prozessanschluss (9, 11) zugewandte Endbereich des Trägers (13, 15) unter Zwischenfügung mindestens eines in parallel zur Flächennormale auf die Messmembran (3) verlaufender Richtung zwischen dem Träger (13, 15) und dem Prozessanschluss (9, 11) angeordneten weiteren Bauteils diffusionsdicht mit dem Prozessanschluss (9, 11) verbunden.

9. Druckmesseinrichtung gemäß Anspruch 1 bis 8, **dadurch gekennzeichnet, dass**
der Prozessanschluss (9, 11) aus einem Edelstahl besteht, und/oder
Messmembran (7) und/oder Grundkörper des Drucksensors (1) jeweils aus einer Oxidkeramik oder aus Aluminiumoxid (Al₂O₃) bestehen.

10. Druckmesseinrichtung gemäß Anspruch 1 bis 9, **dadurch gekennzeichnet, dass**
die Fügung (23) durch eine mittels eines Fügeverfahrens erzeugte Fügung (23) erhältlich ist, und durch das Fügeverfahren
a) eine Anordnung erzeugt wird, in der die Fügeflächen von Träger (13, 15) und Drucksensor (1) unter Zwischenfügung des Hartlots aufeinander aufliegen, und
b) die Anordnung auf eine Fügetemperatur erwärmt wird, bei der das Hartlot aufgeschmolzen wird und ein Anteil des im Träger (13, 15) enthaltenen Titans durch das mit dem Träger (13, 15) in Kontakt stehende, aufgeschmolzene Hartlot hindurch zur Keramik des Drucksensors (1) diffundiert und dort derart mit der Keramik reagiert, dass sich eine Titan umfassende chemische Verbindung ausbildet.

11. Druckmesseinrichtung gemäß Anspruch 10, **dadurch gekennzeichnet, dass**
die Fügung (23) zwischen Drucksensor (1) und Träger (13, 15) eine mittels eines Silber und Kupfer umfassenden Hartlots, eines ausschließlich Silber und Kupfer umfassenden Hartlots, eines Silber, Kupfer und eine weitere nicht aktive Komponente umfassenden Hartlots, eines Silber-Kupfer-Indium-Hartlots oder eines Silber-Kupfer-Zinn-Hartlots erzeugte Fügung (23) ist.

12. Druckmesseinrichtung gemäß Anspruch 1-11, **dadurch gekennzeichnet, dass** der Träger (13, 15) mit dem Prozessanschluss (9, 11) oder einem zwischen dem Träger (13, 15) und dem Prozessanschluss (9, 11) angeordneten Bauteil aus Edelstahl entweder mittels einer als Schweißung ausgebildeten Fügung oder mittels einer mittels eines Hartlots erzeugten Fügung (21) verbunden ist, wobei das zur Erzeugung dieser Fügung (21) eingesetzte Hartlot entweder
a) gleich dem zur Erzeugung der den Drucksensor (1) mit dem Träger (13, 15) verbindenden Fügung (23) eingesetzten Hartlots ist oder zumindest eine Schmelztemperatur aufweist, die im Wesentlichen gleich der Schmelztemperatur des zur Erzeugung der den Drucksensor (1) mit dem Träger (13, 15) verbindenden Fügung (23) eingesetzten Hartlots ist, oder
b) eine Schmelztemperatur aufweist, die geringer als eine Schmelztemperatur des zur Erzeugung der den Drucksensor (1) mit dem Träger (13, 15) verbindenden Fügung (23) eingesetzten Hartlots ist, und/oder ein Kupfer-Silber-Hartlot ist, das einen höheren Kupfer-Anteil und einen geringeren Silber-Anteil enthält als das Kupfer und Silber umfassende, zur Erzeugung der Fügung (23) zwischen Drucksensor (1) und Träger (13, 15) eingesetzte Hartlot.

13. Verfahren zur Herstellung einer Druckmesseinrichtung gemäß Anspruch 1 bis 12, **dadurch gekennzeichnet, dass**
der Drucksensor (1), der Träger (13, 15) und der Prozessanschluss (9, 11) als vorgefertigte Einzelteile bereitgestellt werden,
der Drucksensor (1) mit dem Träger (13, 15) verbunden wird, indem ein Fügeverfahren ausgeführt wird, mittels dessen die den Drucksensor (1) mit dem Träger (13, 15) verbindende Fügung (23) erzeugt wird, und
der Träger (13, 15) auf dem Prozessanschluss (9, 11) montiert wird.

14. Verfahren gemäß Anspruch 13, **dadurch gekennzeichnet, dass** die den Drucksensor (1) mit dem Träger (13, 15) verbindende Fügung (23) mittels eines Fügeverfahrens ausgeführt wird, bei dem
a) eine Anordnung erzeugt wird, in der die Fügeflächen von Träger (13, 15) und Drucksensor (1) unter Zwischenfügung des Hartlots aufeinander aufliegen, und
b) die Anordnung auf eine Fügetemperatur erwärmt wird, bei der das Hartlot aufgeschmolzen wird und ein Anteil des im Träger (13, 15) enthaltenen Titans durch das mit dem Träger (13, 15) in Kontakt stehende, aufgeschmolzene Hartlot hindurch zur Keramik des Drucksensors (1) diffundiert und dort derart mit der Keramik reagiert, dass sich eine Titan umfassende chemische Verbindung ausbildet.

## Claims

1. Pressure measuring device comprising
a ceramic pressure sensor (1), and
a process connection (9, 11), by means of which the pressure measuring device can be mounted on a complementary connection and/or connected to a complementary connection of a differential pressure line,
whose pressure sensor (1) comprises a measuring diaphragm (7) and is secured in such a way that its measuring diaphragm (7) can be subjected to a pressure (p) to be measured,
wherein the pressure measuring device comprises a support (13, 15) made of titanium,
wherein the support (13, 15) comprises a free-standing, tubular support region (17, 19) extending parallel to the normal to the surface of the measuring diaphragm (7),
wherein the support (13, 15) comprises an end region facing the process connection (9, 11) and connected to the process connection (9, 11), and
wherein the support (13, 15) comprises an end region facing away from the process connection (9, 11), to which the pressure sensor (1) is attached by means of a joint (23) that connects an outer edge of an end face of the pressure sensor (1) to the end region of the support (13, 15), whereby the joint (23) between the pressure sensor (1) and the carrier (13, 15) is a joint (23) produced by brazing,
**characterized in that**
the brazing alloy is free of active components used for active brazing, and
the support (13) is designed as a tube arranged as a free-standing element on the process connection (9) and encompassing the tubular support region (17), the end region of which opposite the process connection (9) is connected by means of the joint (23) to an outer edge of the front end face of the pressure sensor (1) formed by the measuring diaphragm (7).

2. Pressure measuring device comprising
a ceramic pressure sensor (1), and
a process connection (9, 11), by means of which the pressure measuring device can be mounted on a complementary connection and/or connected to a complementary connection of a differential pressure line,
whose pressure sensor (1) comprises a measuring membrane (7) and is secured in such a way that its measuring membrane (7) can be subjected to a pressure (p) to be measured,
wherein the pressure measuring device comprises a support (13, 15) made of titanium,
wherein the support (13, 15) comprises a freestanding, tubular support region (17, 19) extending parallel to the normal to the surface of the measuring diaphragm (7),
wherein the support (13, 15) comprises an end region facing the process connection (9, 11) and connected to the process connection (9, 11), and
wherein the support (13, 15) comprises an end region facing away from the process connection (9, 11), to which the pressure sensor (1) is attached by means of a joint (23) that connects an outer edge of an end face of the pressure sensor (1) to the end region of the support (13, 15), whereby the joint (23) between the pressure sensor (1) and the carrier (13, 15) is a joint (23) produced by brazing, and
**characterized in that**
the brazing alloy is free of active components used for active brazing, and
that the measuring diaphragm (3) is connected to a base body (7) of the pressure sensor (1) while enclosing a pressure chamber (5),
the end region of the support (15) facing away from the process connection (11) has a shoulder (25) that radially extends inward and is connected at its end to the tubular support region (19), and
an outer edge of the rear end face of the pressure sensor (1), formed by the base body (7), is connected by means of the joint (23) to an inner edge region of the inner side of the shoulder (25)-which faces the process connection (11)-spaced apart from the tubular support region (19).

3. Pressure measuring device according to claim 2, **characterized in that**
the support region (19) has a length, in a direction parallel to a normal to the measuring membrane (3), that is greater than or equal to the overall height of the pressure sensor (1) in a direction parallel to a normal to the measuring membrane (3).

4. Pressure measuring device according to claims 1 through 3, **characterized in that** the process connection (9, 11) comprises a pressure transmission path (27) extending through the process connection (9, 11), which opens into a pressure-receiving chamber (29) located upstream of the measuring membrane (3) and sealed in a diffusion-tight manner, via which the measuring membrane (3) can be subjected to the pressure (p) to be measured.

5. A pressure measuring device according to claims 1 through 4, **characterized in that**
the tubular support region (17, 19) of the support (13, 15) has a length, in a direction parallel to the longitudinal axis and extending toward the measuring diaphragm (7), that is greater than its wall thickness, and/or
the tubular support region (17, 19) of the support (13, 15) has a wall thickness of 1 mm to 2 mm.

6. Pressure measuring device according to claims 1 through 5, **characterized in that** the pressure sensor (1) is designed as a freestanding pressure sensor (1) secured exclusively by means of the joint (23) connecting the edge of the end face of the pressure sensor (1) to the support (13, 15).

7. Pressure measuring device according to claims 1 through 6, **characterized in that** the pressure measuring device comprises a housing (43), wherein the housing (43)
is mounted on the process connection (9, 11),
encloses the carrier (13, 15), the pressure sensor (1), and a measurement electronics unit (33) connected to the pressure sensor (1), and
is spaced apart from the carrier (13, 15) and from the pressure sensor (1).

8. Pressure measuring device according to claims 1 through 7, **characterized in that**
an end face of the end region of the carrier (13, 15) facing the process connection (9, 11) is directly connected to the process connection (9, 11) by means of a joint (21), or
the end region of the carrier (13, 15) facing the process connection (9, 11) is connected in a diffusion-tight manner to the process connection (9, 11).

9. Pressure measuring device according to claims 1 through 8, **characterized in that**
the process connection (9, 11) is made of stainless steel, and/or
the measuring membrane (7) and/or the base body of the pressure sensor (1) are each made of an oxide ceramic or of aluminum oxide (Al₂O₃).

10. Pressure measuring device according to claims 1 through 9, **characterized in that**
the joint (23) is obtainable by a joint (23) produced by means of a joining process, and by the joining process
a) an arrangement is created in which the joining surfaces of the carrier (13, 15) and the pressure sensor (1) rest against one another with the brazing material interposed between them, and
b) the assembly is heated to a joining temperature at which the brazing alloy melts and a portion of the titanium contained in the carrier (13, 15) diffuses through the molten brazing alloy-which is in contact with the carrier (13, 15) to the ceramic of the pressure sensor (1), where it reacts with the ceramic in such a way that a chemical compound containing titanium is formed.

11. Pressure measuring device according to claim 10, **characterized in that**
the joint (23) between the pressure sensor (1) and the carrier (13, 15) is a joint (23) produced by a brazing alloy comprising silver and copper, a brazing alloy comprising exclusively silver and copper, a brazing alloy comprising silver, copper, and another inactive component; a silver-copper-indium brazing; or a silver-copper-tin brazing.

12. Pressure measuring device according to claims 1-11, **characterized in that** the carrier (13, 15) is connected to the process connection (9, 11) or to a stainless steel component arranged between the carrier (13, 15) and the process connection (9, 11), either by means of a joint formed as a weld or by means of a joint (21) formed using a brazing alloy, wherein the brazing alloy used to form this joint (21) is either
a) is the same as the brazing alloy used to form the joint (23) connecting the pressure sensor (1) to the carrier (13, 15), or has a melting temperature that is substantially equal to the melting temperature of the brazing alloy used to form the joint (23) connecting the pressure sensor (1) to the carrier (13, 15), or
b) has a melting temperature that is lower than the melting temperature of the brazing alloy used to form the joint (23) connecting the pressure sensor (1) to the carrier (13, 15), and/or is a copper-silver brazing alloy that contains a higher proportion of copper and a lower proportion of silver than the brazing alloy comprising copper and silver used to form the joint (23) between the pressure sensor (1) and the carrier (13, 15).

13. A method for manufacturing a pressure measuring device according to claims 1 through 12, **characterized in that**
the pressure sensor (1), the carrier (13, 15), and the process connection (9, 11) are provided as prefabricated individual parts,
the pressure sensor (1) is connected to the carrier (13, 15) by performing a joining process that creates the joint (23) connecting the pressure sensor (1) to the carrier (13, 15), and
the carrier (13, 15) is mounted on the process connection (9, 11).

14. The method according to claim 13, **characterized in that** the joint (23) connecting the pressure sensor (1) to the carrier (13, 15) is formed by means of a joining process in which
a) an assembly is formed in which the joining surfaces of the carrier (13, 15) and the pressure sensor (1) rest against one another with the brazing material interposed between them, and
b) the assembly is heated to a joining temperature at which the brazing alloy melts and a portion of the titanium contained in the carrier (13, 15) diffuses through the molten brazing alloy-which is in contact with the carrier ( (13, 15) into the ceramic of the pressure sensor (1), where it reacts with the ceramic in such a way that a chemical compound containing titanium is formed.

## Revendications

1. Dispositif de mesure de pression comprenant
un capteur de pression en céramique (1), et
un raccord de process (9, 11), au moyen duquel le dispositif de mesure de pression peut être monté sur un raccord complémentaire et/ou raccordé à un raccord complémentaire d'une conduite de pression active,
dont le capteur de pression (1) comprend une membrane de mesure (7) et est fixé de telle sorte que sa membrane de mesure (7) puisse être soumise à une pression (p) à mesurer,
le dispositif de mesure de pression comprenant un support (13, 15) en titane,
le support (13, 15) comprenant une zone de support (17, 19) en porte-à-faux, de forme tubulaire, s'étendant parallèlement à la normale à la surface de la membrane de mesure (7),
le support (13, 15) comprenant une partie d'extrémité tournée vers le raccord de process (9, 11) et reliée à celui-ci, et
le support (13, 15) comprenant une zone d'extrémité opposée au raccord de process (9, 11), sur laquelle le capteur de pression (1) est fixé au moyen d'un assemblage (23) reliant un bord extérieur d'une face frontale du capteur de pression (1) à la zone d'extrémité du support (13, 15) opposée au raccord de process (9, 11) (13, 15), l'assemblage (23) entre le capteur de pression (1) et le support (13, 15) étant réalisé au moyen d'une soudure forte,
**caractérisé en ce que**
le brasage fort est exempt de composants actifs pouvant être utilisés pour le brasage fort actif et le support (13) est conçu comme un tube disposé de manière autonome sur le raccord de process (9) et comprenant la partie de support tubulaire (17), dont la zone d'extrémité opposée au raccord de process (9) est reliée, au moyen de la jonction (23), à un bord extérieur de la face frontale avant du capteur de pression (1), formée par la membrane de mesure (7).

2. Dispositif de mesure de pression comprenant
un capteur de pression en céramique (1), et
un raccord de process (9, 11), au moyen duquel le dispositif de mesure de pression peut être monté sur un raccord complémentaire à celui-ci et/ou raccordé à un raccord complémentaire à celui-ci d'une conduite de pression différentielle,
dont le capteur de pression (1) comprend une membrane de mesure (7) et est fixé de telle sorte que sa membrane de mesure (7) puisse être soumise à une pression (p) à mesurer,
le dispositif de mesure de pression comprenant un support (13, 15) en titane,
le support (13, 15) comprenant une zone de support (17, 19) en porte-à-faux, de forme tubulaire, s'étendant parallèlement à la normale à la membrane de mesure (7),
le support (13, 15) comprenant une partie d'extrémité tournée vers le raccord de process (9, 11) et reliée à celui-ci, et
le support (13, 15) comprenant une zone d'extrémité opposée au raccord de process (9, 11), sur laquelle le capteur de pression (1) est fixé au moyen d'un assemblage (23) reliant un bord extérieur d'une face frontale du capteur de pression (1) à la zone d'extrémité du support (13, 15) opposée au raccord de process (9, 11) (13, 15), l'assemblage (23) entre le capteur de pression (1) et le support (13, 15) étant réalisé au moyen d'une soudure forte, et
**caractérisé en ce que**
le brasage fort est exempt de composants actifs pouvant être utilisés pour le brasage fort actif et que la membrane de mesure (3) est reliée à un corps de base (7) du capteur de pression (1) en formant une chambre de pression (5),
la zone d'extrémité du support (15) opposée au raccord de process (11) présente un épaulement (25) se raccordant à son extrémité à la partie tubulaire (19) du support et s'étendant radialement vers l'intérieur, et
un bord extérieur de la face arrière du capteur de pression (1), formée par le corps de base (7), est relié, au moyen de l'assemblage (23), à une zone de bord intérieur de la face interne de l'épaulement (25) tournée vers le raccord de process (11) et espacée de la partie de support tubulaire (19).

3. Dispositif de mesure de pression selon la revendication 2, **caractérisé en ce que**
la zone de support (19) présente, dans une direction parallèle à la normale à la membrane de mesure (3), une longueur supérieure ou égale à la hauteur de construction que présente le capteur de pression (1) dans une direction parallèle à la normale à la membrane de mesure (3).

4. Dispositif de mesure de pression selon les revendications 1 à 3, **caractérisé en ce que** le raccord de process (9, 11) comporte un chemin de transmission de pression (27) s'étendant à travers le raccord de process (9, 11), qui débouche dans une chambre de réception de pression (29) située en amont de la membrane de mesure (3) et fermée de manière étanche à la diffusion, par l'intermédiaire de laquelle la membrane de mesure (3) peut être soumise à la pression (p) à mesurer.

5. Dispositif de mesure de pression selon les revendications 1 à 4, **caractérisé en ce que**
la partie tubulaire (17, 19) du support (13, 15) présente, dans une direction parallèle à l'axe longitudinal et s'étendant vers la membrane de mesure (7), une longueur supérieure à l'épaisseur de sa paroi, et/ou
la partie tubulaire (17, 19) du support (13, 15) présente une épaisseur de paroi comprise entre 1 mm et 2 mm.

6. Dispositif de mesure de pression selon les revendications 1 à 5, **caractérisé en ce que** le capteur de pression (1) est conçu comme un capteur de pression (1) autonome, fixé exclusivement au moyen de l'assemblage (23) reliant le bord de la face frontale du capteur de pression (1) au support (13, 15).

7. Dispositif de mesure de pression selon l'une des revendications 1 à 6, **caractérisé en ce que** le dispositif de mesure de pression comprend un boîtier (43), le boîtier (43)
est monté sur le raccord de process (9, 11),
entoure le support (13, 15), le capteur de pression (1) et un système électronique de mesure (33) raccordé au capteur de pression (1), et
est espacé du support (13, 15) et du capteur de pression (1).

8. Dispositif de mesure de pression selon les revendications 1 à 7, **caractérisé en ce que**
une face frontale de la zone d'extrémité du support (13, 15), tournée vers le raccord de process (9, 11), est reliée directement au raccord de process (9, 11) au moyen d'un assemblage (21), ou
la zone d'extrémité du support (13, 15) tournée vers le raccord de process (9, 11) est reliée de manière étanche à la diffusion au raccord de process (9, 11) (9, 11).

9. Dispositif de mesure de pression selon les revendications 1 à 8, **caractérisé en ce que**
le raccord de process (9, 11) est en acier inoxydable, et/ou
la membrane de mesure (7) et/ou le corps de base du capteur de pression (1) sont chacun constitués d'une céramique d'oxyde ou d'oxyde d'aluminium (Al₂O₃).

10. Dispositif de mesure de pression selon les revendications 1 à 9, **caractérisé en ce que**
l'assemblage (23) peut être obtenu par un procédé d'assemblage, et que ce procédé d'assemblage
a) on réalise un agencement dans lequel les surfaces d'assemblage du support (13, 15) et du capteur de pression (1) reposent l'une sur l'autre avec interposition de la brasure forte, et
b) l'ensemble est chauffé à une température d'assemblage à laquelle la brasure dure fond et une partie du titane contenu dans le support (13, 15) diffuse à travers la brasure dure fondue en contact avec le support (13, 15) vers la céramique du capteur de pression (1), où il réagit avec celle-ci de manière à former un composé chimique contenant du titane.

11. Dispositif de mesure de pression selon la revendication 10, **caractérisé en ce que**
la jonction (23) entre le capteur de pression (1) et le support (13, 15) est une jonction (23) réalisée à l'aide d'un alliage de brasage comprenant de l'argent et du cuivre, d'un alliage de brasage comprenant exclusivement de l'argent et du cuivre, d'un alliage de brasage comprenant de l'argent, du cuivre et d'un autre composant inactif, d'un brasage fort à base d'argent, de cuivre et d'indium ou d'un brasage fort à base d'argent, de cuivre et d'étain.

12. Dispositif de mesure de pression selon les revendications 1 à 11, **caractérisé en ce que** le support (13, 15) est relié au raccord de process (9, 11) ou à un composant en acier inoxydable disposé entre le support (13, 15) et le raccord de process (9, 11), soit au moyen d'un assemblage réalisé sous forme de soudure, soit au moyen d'un assemblage (21) réalisé à l'aide d'un alliage de brasage, l'alliage de brasage utilisé pour réaliser cet assemblage (21) étant soit
a) est identique au métal d'apport utilisé pour réaliser la liaison (23) reliant le capteur de pression (1) au support (13, 15), ou présente au moins une température de fusion sensiblement égale à la température de fusion du métal d'apport utilisé pour réaliser la liaison (23) reliant le capteur de pression (1) au support (13, 15), ou
b) présente une température de fusion inférieure à celle de la brasure utilisée pour réaliser le joint (23) reliant le capteur de pression (1) au support (13, 15), et/ou est un alliage de brasage cuivre-argent qui contient une proportion de cuivre plus élevée et une proportion d'argent plus faible que l'alliage de brasage comprenant du cuivre et de l'argent utilisé pour réaliser la jonction (23) entre le capteur de pression (1) et le support (13, 15).

13. Procédé de fabrication d'un dispositif de mesure de pression selon les revendications 1 à 12, **caractérisé en ce que**
le capteur de pression (1), le support (13, 15) et le raccord de process (9, 11) sont fournis sous forme de pièces individuelles préfabriquées,
le capteur de pression (1) est assemblé au support (13, 15) par la mise en œuvre d'un procédé d'assemblage permettant de réaliser la jonction (23) reliant le capteur de pression (1) au support (13, 15), et
le support (13, 15) est monté sur le raccord de process (9, 11).

14. Procédé selon la revendication 13, **caractérisé en ce que** la jonction (23) reliant le capteur de pression (1) au support (13, 15) est réalisée au moyen d'un procédé d'assemblage dans lequel
a) on réalise un agencement dans lequel les surfaces d'assemblage du support (13, 15) et du capteur de pression (1) reposent l'une sur l'autre avec interposition de la brasure forte, et
b) l'ensemble est chauffé à une température d'assemblage à laquelle la brasure dure fond et une partie du titane contenu dans le support (13, 15) diffuse à travers la brasure dure fondue en contact avec le support (13, 15) vers la céramique du capteur de pression (1), où il réagit avec celle-ci de manière à former un composé chimique contenant du titane.
